Europäisches Patentamt

European Patent Office ·

Office européen des brevets

(11) Publication number: **0 056 289**
**B1**

# EUROPEAN PATENT SPECIFICATION

(45) Date of publication of patent specification: **04.12.85**

(21) Application number: **82200014.7**

(22) Date of filing: **08.01.82**

(51) Int. Cl.⁴: **B 32 B 15/08,** B 64 C 1/00,
B 64 C 27/46

(54) Laminate of aluminium sheet material and aramid fibres.

(30) Priority: **09.01.81 NL 8100087**

(43) Date of publication of application:
**21.07.82 Bulletin 82/29**

(45) Publication of the grant of the patent:
**04.12.85 Bulletin 85/49**

(84) Designated Contracting States:
**AT BE CH DE FR GB IT LI NL SE**

(56) References cited:
**EP-A-0 013 146
FR-A-2 322 190
GB-A- 635 823
US-A-3 321 019
US-A-4 029 838**

(73) Proprietor: **Technische Hogeschool Delft
Julianalaan 134
NL-2628 BL Delft (NL)**

(72) Inventor: **Schijve, Jacobus
Dr. W. v.d. Horstlaan 56
NL-2641 RW Pijnacker (NL)**
Inventor: **Vogelesang, Laurens Boudewijn
Chopinplein 7
NL-2421 TT Nieuwkoop (NL)**
Inventor: **Marissen, Roelof
Kitschburgerstrasse 22
D-5000 Köln 90 (DE)**

(74) Representative: **Sieders, René et al
P.O. Box 314
NL-6800 AH Arnhem (NL)**

EP 0 056 289 B1

Courier Press, Leamington Spa, England.

## Description

The invention relates to a laminate composed of at least two aluminium-containing metal sheets, between which there are provided fibres based on aromatic polyamides and having a high modulus of elasticity, the metal sheets and the fibres being bonded together by means of an adhesive and the metal sheets each having a thickness which is smaller than 1 mm.

A laminate of the type indicated above may be considered more or less known from European Patent 0013146. This known laminate is of the metal-plastic-metal type. The laminate comprises a relatively thick core layer of a thermoplastic material which is covered on both sides with a relatively thin metal facing. In fact, the plastic core layer has a thickness which is several times that of each metal facing. EP—A—0013146 particularly relates to a development which is to be substituted for conventional all-metal sheet material for automobile bodies. One of the most important features of sheet metal for automobile bodies is that it is considerably and readily deformable. For that reason the known laminate is provided with a thermoplastic layer between the metal facings leading to very good plastic deformation of the laminate as a whole. Page 19, lines 35 ff of EP—A—0013146 contain a discussion of various modifying agents that may be included in the thermoplastic core material. It also says that one such modification comprises reinforcing the thermoplastic material with mineral and/or organic fillers and fibres which may have been treated with adhesion promotors or coupling agents capable of increasing the adhesion of the fillers and fibres to the thermoplastic matrix molecules. Further, said EP-publication discloses that aromatic polyamide fibres are among those that may be utilized as modifying agents, as well as fibres of graphite, boron, steel, potassium titanate whiskers and the like. In order to permit the required high deformation of the well-known laminate during the manufacture of automobile bodies the fibres that may be contained in the plastic core of the well-known laminate will be present in the form of short, discontinuous fibres. Though the laminates disclosed in EP—A—0013146 may reasonably comply with the standards to be met for said uses as regards high deformation, e.g. during the manufacture of automobile bodies, the well-known laminates are insufficiently capable of meeting the high demands made of late on structural components in air and space craft engineering.

The invention has for its object to provide a laminate of the type indicated above which is more capable of satisfying present requirements.

The laminate is characterized according to the invention in that:

A. the aromatic polyamide fibres consist of poly-paraphenylene terephthalamide (PPDT) yarns;

B. said PPDT yarns are made up of endless filaments and the yarns are so contained in the completed laminate that they lie in practically straight lines in the adhesive;

C. said PPDT filaments are of a material whose modulus of elasticity is in the range of higher than $5 \times 10^4$ to not higher than $25 \times 10^4$ N/mm², however preferably in the range of $10 \times 10^4$ to $15 \times 10^4$ N/mm² and more particularly about $13 \times 10^4$ N/mm²;

D. said adhesive substantially consists of a thermohardening material;

E. said PPDT filaments are present in said adhesive in an amount of 20 to 80% by weight, preferably 45 to 55%, calculated on the total weight of adhesive and filaments;

F. each of said metal sheets is of an aluminium alloy having a tensile strength higher than 350N/mm²;

G. the thickness of each of the metal sheets is greater than the thickness of the individual threads-adhesive layers;

The modulus of elasticity envisaged here is determined in accordance with ASTM—D 2343.

Yarns of polyparaphenylene terephthalamide and their properties are described in a paper by Kh. Hillermeyer and H. Weyland: "An aramid yarn for reinforcing plastics", Plastica, November 1977, No. 11, pp. 374 through 380. In Table 1 of said paper it is stated that the elongation at break of PPDT-yarns sold under the trade names Arenka 900 and Arenka 930 are 3.7% and 2%, respectively.

The laminate according to the invention is with advantage characterized in that the thickness of each of the metal sheets is in the range of 0.3 to 0.7 mm. By preference, the metal sheets in the laminate according to the invention are of an aluminium alloy, such as an aluminium-copper alloy, more particularly of the type AA(USA) No. 2024-T₃, or an aluminium-zinc alloy, more particularly of the type AA(USA) No. 7075-T₆.

A preferred embodiment of the laminate is characterized according to the invention in that the threads are arranged in one or more groups in which the yarns extend parallel to one another. According to the invention the yarns may be provided in the form of a plain weave fabric having 7 to 11, preferably about 9, warp yarns per cm, each having a linear density of decitex 1200-2000, preferably about decitex 1610, and 750 to 1250 filaments, preferably about 1000 filaments. The weft of the fabric may be made up of 5.5 yarns per cm, each having a linear density of dtex 200 and 125 filaments.

According to the invention the yarns may with advantage be provided in one or more layers or the yarns may extend in two or more different directions.

In a favourable embodiment of the invention the laminate is composed of three, four, five or more metal sheets between which there are provided the yarns having a high modulus of elasticity, and the metal sheets and the yarns are bonded together by means of an adhesive, for instance a metal glue, the yarns being contained in the adhesive layers in an amount of from 20 to 30 up to 80, preferably about 45 to 50 or up to 55% by weight.

The optimum number of metal sheets may be determined depending on the application envisaged and the requirements to be satisfied. Although there is generally no limit to the number of metal sheets to be used, the number of metal sheets will generally not be more than 25. By choosing the proper type of adhesive in combination with reinforcing yarns of the proper material a laminate is obtained, according to the invention, in which the thickness of each of the metal sheets is greater than the thickness of the individual, yarns-containing layers of adhesive. Thin sheet material is to be preferred to thick sheet material because of its greater static and dynamic properties. Thin sheet material is also to be preferred with a view to the occurrence of delamination during fatigue loading. Using a relatively greater number of thin metal and yarns-adhesive layers instead of a smaller number of relatively thick layers will cause the shear stress peak in the glue to be lowered and the chance of delamination will be reduced. If according to the invention the sheet thickness is to be optimized (optimum metal-yarns ratio), said favourable results will be obtained.

The laminate according to the invention may be applied with particular advantage as structural component in a vehicle or in a space- or aircraft, for instance as lower wing skin material, partly in order to obtain a saving on weight of the construction and partly with a view to safety as far as crack formation is concerned.

As adhesive may be used a good metal glue, such as BSL 312 UL or FM—123—5 or FM 73 marketed by Ciba-Geigy or the glue types AF 126—2 and AF 162—3 marketed by 3M Company. However, also other warm- or coldcuring metal glues may be used. In the completed laminate according to the invention the adhesive layer is formed of a thermohardening synthetic material on a basis of, for instance, epoxy resin. In contradistinction to a thermoplastic synthetic material a thermohardening synthetic material will not turn plastic or melt at elevated temperatures.

With respect to the prior art reference is also made to a paper by D. K. Klapprott, C. L. Mahoney, T. F. Mika, P. M. Stifel and T. J. Apongi 'Improved Fatigue Life Through High Modulus Fiber Reinforcement of Adhesives', 20 National Sample, April 1975. This paper does not relate to structural components in the form of proper laminates, but only to experiments as to joining the adjacent edges of two basic titanium metal sheets or plates lying in the same plane. The resulting joint is of the double lap or double strip type, i.e. at their edges the metal sheets are covered on both sides, with a narrow strip. In Figure 2 of the Klapprott article a test specimen is shown in which the two basic, relatively thick (0.050 inch = 1.27 mm) metal sheets are joined by two narrow composite strips (thickness also 0.050 inch = 1.27 mm) covering the upper and lower sides of the adjacent edges of the two basic metal sheets or plates. The two strips are composites, i.e. an epoxy resin matrix reinforced with fibres. These two composite strips are secured to the basic metal sheets by the adhesive action of the epoxy resin matrix, as a result of the which the ends of the two basic metal sheets are attached to each other. The Klapprott article is particularly concerned with experiments in which use is made of composites which are reinforced with high modulus fibres. The Klapprott article mainly shows that the fatigue life of double lap type joints of two basic metal sheets is improved by using composite strips formed by high modulus fibre-reinforced adhesives.

US—A—3 321 019 describes a helicopter blade which is partially reinforced with a laminate of aluminium sheets and fibreglass cloth.

GB—A—635 823 describes a laminate of metal sheets and a fibrous material, such as a paper fabric of a glass cloth impregnated with synthetic resin. It mentions the use of these known composite sheets for aircraft wings. Also US—A—4 029 838 and FR—A—2 322 190 describe composite laminate structures of metal sheets and various kinds of fibres.

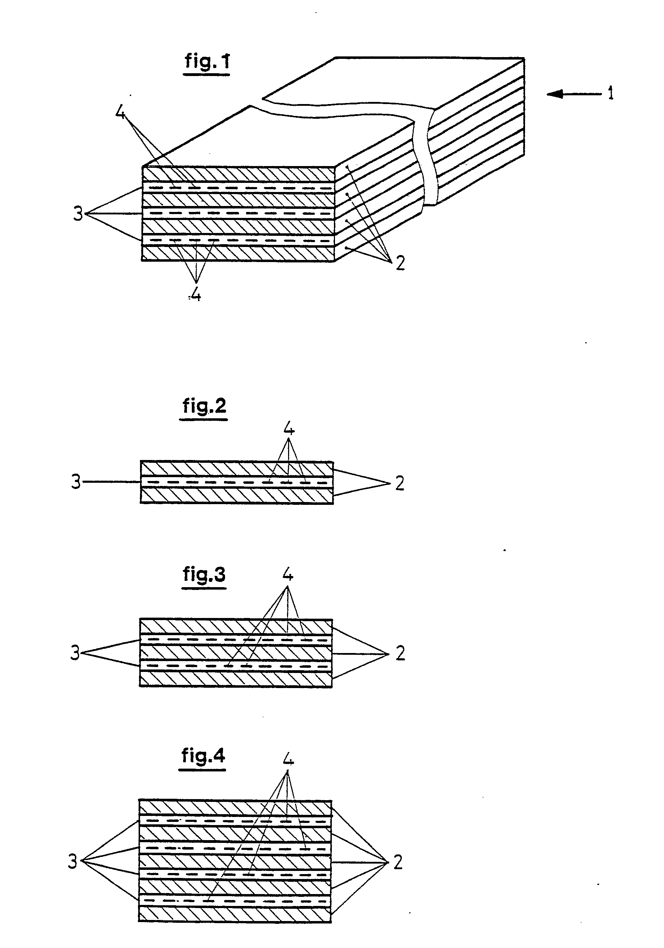

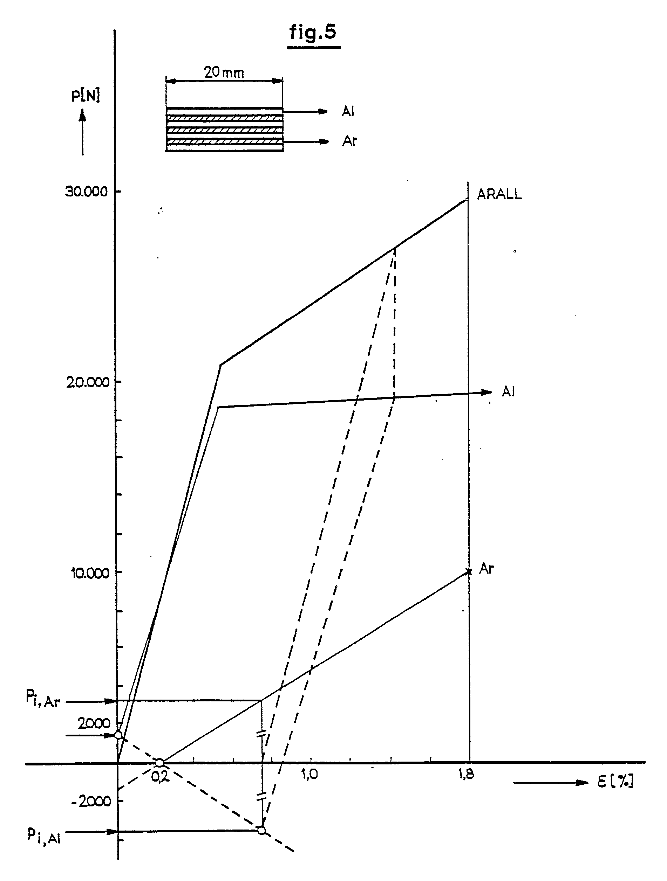

GB—A—1 303 301 describes a method of manufacturing a composite material article in the form of a sheet sandwich structure of metal sheets having bonded between them a layer of fibrous reinforced plastics material. Particularly the fibrous material may comprise carbon fibres and/or glass fibres. In order that the fibres may be properly positioned in the completed laminate said publication describes an apparatus with reference to Fig. 3 and 4 by means of which some pull is applied to the fibres in order that they may neatly lie in a straight line in the completed laminate. This stretching and straightening of the fibres, however, does not at all lead to an end-product that may be considered a prestressed laminate. For when this known laminate is unloaded in its entirety there will be no compressive stress in the metal sheets in combination with tensile stress in the fibres.

US—A—3 189 054 mainly relates to a tubular laminate article comprising alternatively wound layers of metal, particularly aluminium, and thermo-set resin impregnated unidirectional glass fibres. In this tubular structure obtained by filament winding the overlying layers each consist of wound strips and tapes. Each metal layer consists of a great many adjacent aluminium strips, the interpositioned layers being formed of a great many adjacent glass fibre tapes. Although this publication must therefore be considered to relate to laminates of a kind different from that according to the present application, US—A—3 189 054 does mention that the layers of metal and glass fibres are prestressed.

DE—A—2 916 229 describes a method of manufacturing a laminate made up of several layers of a low-melting metal having fibre-reinforced layers positioned between them. On its outside the laminate is covered with layers of a material which has better thermal and mechanical properties than the low-melting metal layers. The method comprises a treatment at elevated temperature at which the low-melting penetrates into the fibrous fabric.

FR—A—2 447 272 describes a specifically laminated upholstery panel for motor-cars. The panel consists of a laminate which is formed in the first place by a number of sheets of an aluminium alloy between which there are placed sheets of thermoplastic material, e.g. polyester. On one side the laminates are covered with several layers of a fabric made up of aramid fibres for absorbing shock loads. These known panels form a laminate of a type which is entirely different from that according to the present invention, which actually appears from the fact that the various layers according to FR—A—2 447 272 are attached to each other by screws.

US—A—4 035 694 describes a metal-clad dielectric sheeting useful in the manufacture of printed circuitry comprising an electrically conductive metalic layer adhered to a nonwoven web that comprises a unique fibre blend compacted and held together by a polymeric binder material. The fibre blend includes heat-resistant fibres, preferably aromatic polyamide fibres, and high-tensile-strength fibres that absorb little moisture. This known laminate is of a type which is totally different from that according to the present application. Notably, said known laminate is not designed for absorbing high mechanical loads, the fibres being present in the form of a nonwoven web.

DE—A—2 642 882 describes a kind of armour plate formed by a laminate. This known laminate consists of at least one steel sheet on which there are placed a number of sheets of a thermoplastic polyamide, between which there are fabrics of aramid fibres. These known laminates are of a type different from that according to the present invention.

An example of a laminate according to the present invention is schematically shown in perspective in Figure 1. The laminate is generally referred to by the numeral 1 and is built up of four metal sheets 2 which are bonded together by means of interposed yarns-adhesive layers 3, in which the yarns are contained in the form of a fabric in which the warp is formed by the yarns 4 having a high modulus of elasticity. The Figures 2, 3 and 4 schematically illustrate cross sections of laminates according to the invention, viewed in the direction transverse to the warp yarns 4 of the reinforcing fabrics. In the Figures 1 through 4 corresponding parts are referred to by like numerals. The laminates illustrated are made up of different numbers of layers. The laminate according to Figure 2 consists of two outer metal sheets 2, which are bonded together by means of the interposed yarns-adhesive layer 3. The laminate according to Figure 3 comprises three metal sheets 2, which are bonded together by means of two interposed yarns-adhesive layer 3. The laminate according to Figure 4 is built up of five metal sheets 2, which are bonded together by means of four yarns-adhesive layers 3. The laminates according to Figure 1, 2, 3 and 4 are entirely symmetrical with a plane through the middle of the laminates and parallel to the plane of the metal sheets. In principle it is also possible to construct laminates that are not symmetrical with a plane parallel to the metal sheets.

The accompanying photograph is a highly magnified cross-sectional view (40×) in the direction perpendicular to the warp threads of the laminate of four metal sheets with three interposed yarns-adhesive layers of the type according to Figure 1. The laminate depicted in the photograph is made up of four metal sheets of an aluminium-copper alloy of the type AA(USA) No. 2024 frequently applied in aircraft building. The thickness of the metal sheets was 0.6 mm. The reinforced layer of adhesive between every two sheets is built up of two adhesive films of a good metal glue each having an initial thickness of 0.08 mm and a mass of 100 g/m². Between these two glue films there is provided a fabric of aramid yarns of the type mentioned before, which fabric had a thickness of about 0.10 mm and a mass of 150 to 180 g/m². The glue that was used was of the type that can be cured only upon its being heated to 120°C.

The procedure for making the laminate (shown in the photograph) was as follows. First of all four identical metal sheets of said aluminium-copper alloy were superimposed on a movable support, with two films of adhesive containing an aramid fabric being placed between every two successive metal sheets. The resulting laminate of loose parallel parts, viz. four metal sheets and three layers of adhesive with reinforcing fabrics was coverd with some thin plastics sheet material while it was still on the support. Subsequently, the wrapped up laminate of loose parts was compressed by creating a vacuum inside the wrapping of the laminate. Next, the wrapped laminate and its support were placed in an autoclave. After the autoclave had been closed, the laminate in it was subjected to an air pressure of 6 bar and the temperature was increased to 120°C. After a 30 minutes' stay in the autoclave the laminate was finished and it was removed from the autoclave. Before being bonded together with the adhesive layers, the metal sheets must, of course, be subjected to some appropriate pre-treatments, such as alkaline degreasing etching in an chromic-sulphuric acid bath, anodizing in chromic or sulphuric acid, applying a primer appropriate to the type of glue used, e.g. on the basis of epoxy phenol and having corrosion inhibiting properties, or the like.

In a simultaneously filed European Patent application No. 82 200 013.9 in the name of applicant (EP—A—0 056 288; priority date: 9.1.81; filing date: 8.1.82) it is set forth that a further improvement of the laminate according to the invention may be obtained when it is pre-stressed.

Figure 5 serves to illustrate and explain the process for the manufacture of a pre-stressed laminate by the method in which the metal sheets are subjected to plastic deformation. Also this example deals with a laminate of four metal sheets of said aluminium-copper alloy type A (USA) No. 2024, the sheets having a thickness of 0.6 mm. The four aluminium sheets (Al) are bonded together by way of three interposed yarns-adhesive layers of metal glue which each contain an aramid fabric (Ar). The yarns-adhesive layers each have a thickness of 0.25 mm. The laminate sample (ARALL) on which the measurements were conducted had a width of 20 mm. In Figure 5 the % specific elongation is plotted as the abscissa against the tensile load P (expressed in newton) as the ordinate. For the three materials the specific elongation with increasing tensile force is indicated by the lines ARALL, Al and Ar. The ARALL line relates to the laminate in its entirety. The Al line relates to the behaviour of said aluminium alloy in itself. The Ar line relates to the behaviour of the yarns-adhesive layer, i.e. an adhesive layer containing a fabric composed of poly-paraphenylene terephthalamide threads. As the bond is brought about here under the influence of heat (120°C), the Al and Ar lines do not begin at the zero point because of the behaviour during cooling after the bonding process and the difference in coefficients of expansion between aluminium and aramid. Figure 5 shows that a laminate (ARALL) is obtained which is unloaded in its entirety and has a compressive stress in the aluminium sheets (Al) in the order of, say, 88.5 N/mm$^2$ and a tensile stress in the adhesive-aramid layers (Ar) of identical magnitude. The laminate thus pre-stressed but unloaded in its entirety may be obtained by subjecting the laminate to such an external tensile force in the direction of the warp yarns of the aramid fabric that the specific elongation is about 1.4%. Figure 5 shows that upon the aluminium sheets being unloaded they display a specific plastic elongation about 0.75%. Depending on the envisaged use of the laminate, the compressive stress desired in the metal sheets of the completed laminate can be pre-set in the manufacture thereof. In Figure 5 $P_{i,A1}$ and $P_{i,Ar}$ are the internal forces in respectively the aluminium sheets and the adhesive layers containing aramid yarns, which forces are equal but are of opposite sign. In the present case $P_{i,A1}$ corresponds to an internal stress of $-88.5$ N/mm$^2$ and the plastic elongation in the aluminium is 0.75%.

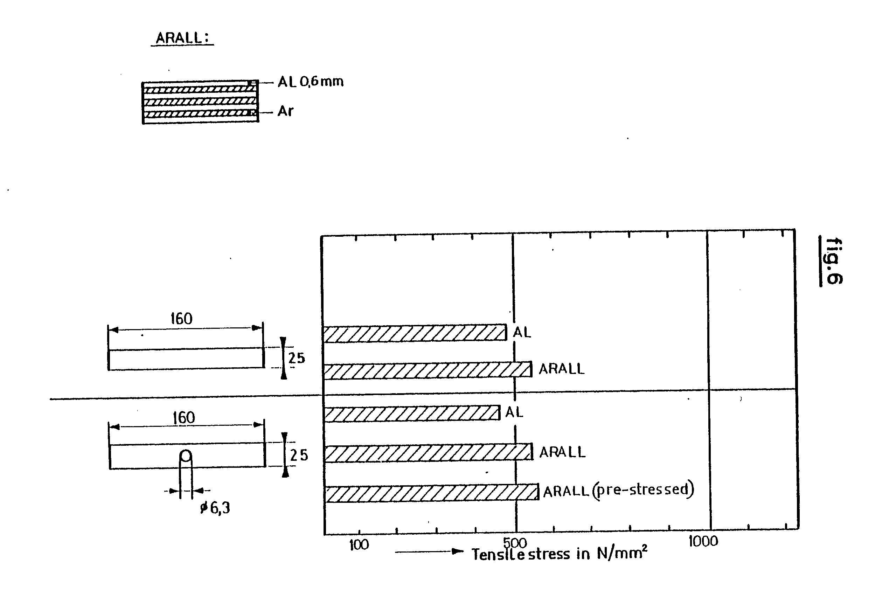

Figure 6 shows the results of tensile tests applied to test specimens without a hole and to test specimens with a hole 6.3 mm in diameter. Also these tests were carried out on a laminate of the ARALL type according to the invention, which is built up of four metal layers of the aluminium-copper alloy of the type AA(USA) No. 2024 and of three aramid fabric-containing layers of adhesive. The tests were carried out on three different materials, viz. on test specimens of said solid aluminium copper alloy denoted by Al, on test specimens of said non-pre-stressed laminate, denoted by ARALL, and on test specimens of the pre-stressed laminate referred to as ARALL (pre-stressed). From Figure 6 it is apparent in the first place that the ARALL and the pre-stressed ARALL laminate have a tensile strength which is about 10 to 15% higher than that of solid aluminium (Al). Further, it is considered particularly favourable that in contrast to the situation with solid aluminium the tensile strength of pre-stressed ARALL is not reduced by the test specimen being provided with a hole.

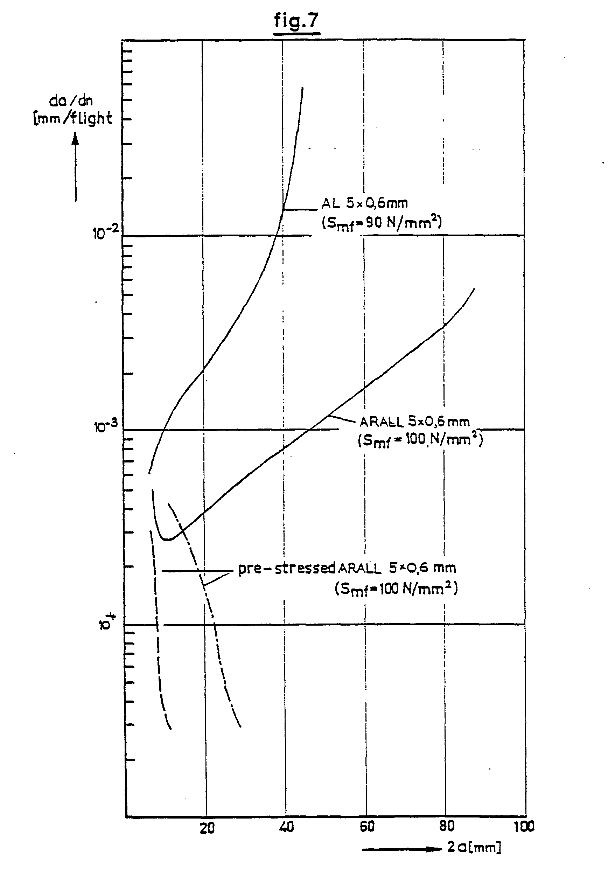

Figure 7 shows the results of simulated flight tests commonly applied in aircraft engineering. The tests were carried out on three types of laminates. The first laminate consisted of five layers of metal sheets bonded together (referred to as Al), the metal being the aluminium-copper alloy of the type AA (USA) No. 2024, no yarns being incorporated in the four layers of adhesive. The second layer was made up of five layers of inter-bonded aluminium sheet of the same alloy, an aramid fabric (referred to as ARALL) being incorporated in the layers of adhesive. The third laminate was of the same type as the second laminate, except that it was pre-stressed (referred to as pre-stressed ARALL). The test specimens measured 300 mm in length, 100 mm in width and 4 mm in total thickness. The full lines and the dash lines indicate the results obtained with test specimens which prior to the test were provided with a 7 mm saw cut. The dot-dash line indicates the results obtained with test specimens which prior to the test were provided in their centres with a circular hole 11 mm in diameter. Figure 7 give the results of the fatigue tests conducted on three types of laminates, the test specimens being subjected to a varying load in accordance with a special flight simulation programme. In Figure 7 the crack length 2 a in mm is plotted on the abscissa and the crack propagation rate da/dn in mm/flight on the ordinate. Comparing the Al line with the ARALL line shows that the crack propagation rate in the ARALL laminate is considerably lower than in the Al laminate. For the pre-stressed ARALL the results are even far more favourable. For in that case the crack propagation rate decreases to almost zero. Also when the tests with pre-stressed ARALL were carried out on a somewhat different test specimen, namely one with a large hole in its centre, the results turned out particularly favourable, as is apparent from the trend of the dash line. In Figure 7 $S_{mF}$ indicates the mean stress in the test specimen during the simulated flight.

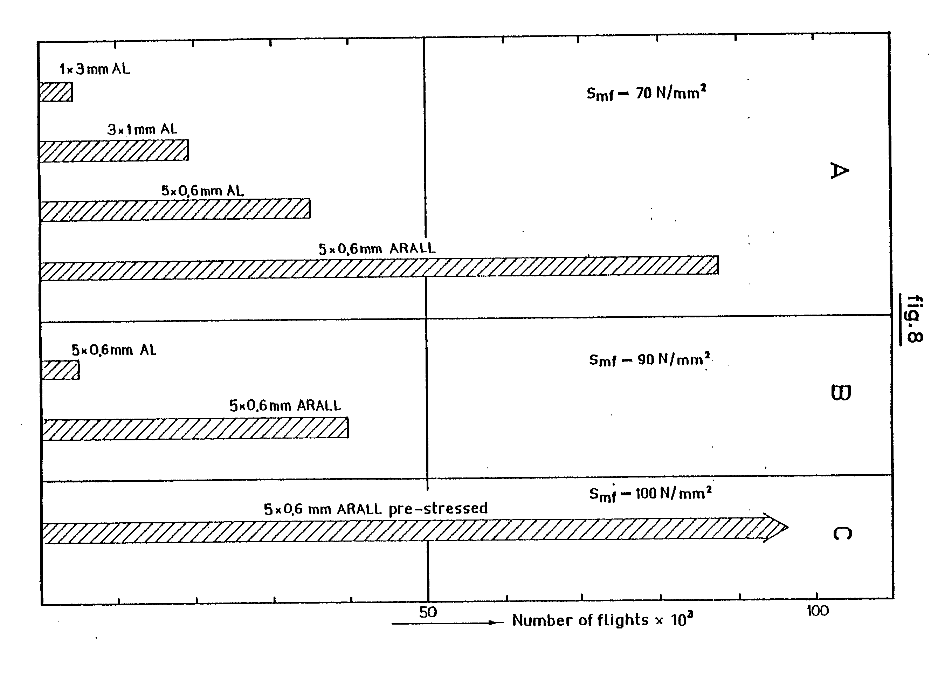

Also Figure 8 gives the results of experiments using varying loads in accordance with a simulated flight test programme practiced in aircraft engineering. All tests were carried out on specimens of $300 \times 100$ mm, 3—4 mm thick and provided with a 3 mm saw cut in their middle. The tests were carried out on five different kinds of material, viz. in the first place solid aluminium having a thickness of 3 mm ($1 \times 3$ mm Al), in the second place an aluminium laminate of three metal sheets having a thickness of 1 mm, without yarns being contained in the adhesive ($3 \times 1$ mm Al), in the third place an aluminium laminate of five metal sheets having a thickness of 0.6 mm, without yarns being contained in the layers of adhesive (5 × 0.6 mm Al), in the fourth place a laminate of five aluminium sheets having a thickness of 0.6 mm and a reinforcing fabric of aramid yarns contained in the layers of adhesive (5 × 0.6 mm ARALL) and in the fifth place a laminate of the last-mentioned type which is pre-stressed (5 × 0.6 mm ARALL pre-stressed). The aluminium is again formed by the aluminium-copper alloy of the type AA (USA) No. 2024. Figure 8 for the various materials the number of simulated flights after which the test specimens ruptured. In the rectangles A, B and C are the results of the tests in which a progressively increasing mean load was applied to the test specimens, viz. $S_{mF} = 70, 90$ and 100 N/mm², respectively. Already from rectangle A in Figure 8 it is apparent that the behaviour of the ARALL material comprising metal sheets 0.6 mm thick, i.e. a thickness well below 1 mm, is particularly favourable. The results mentioned in the rectangle B of tests in which a higher mean load was applied confirm the favourable behaviour of the ARALL material. Finally, in rectangle C are the results of subjecting a test specimen of the pre-stressed ARALL laminate to an even higher load. It shows that even after as many as 100,000 simulated flights the pre-stressed ARALL laminate was not ruptured yet.

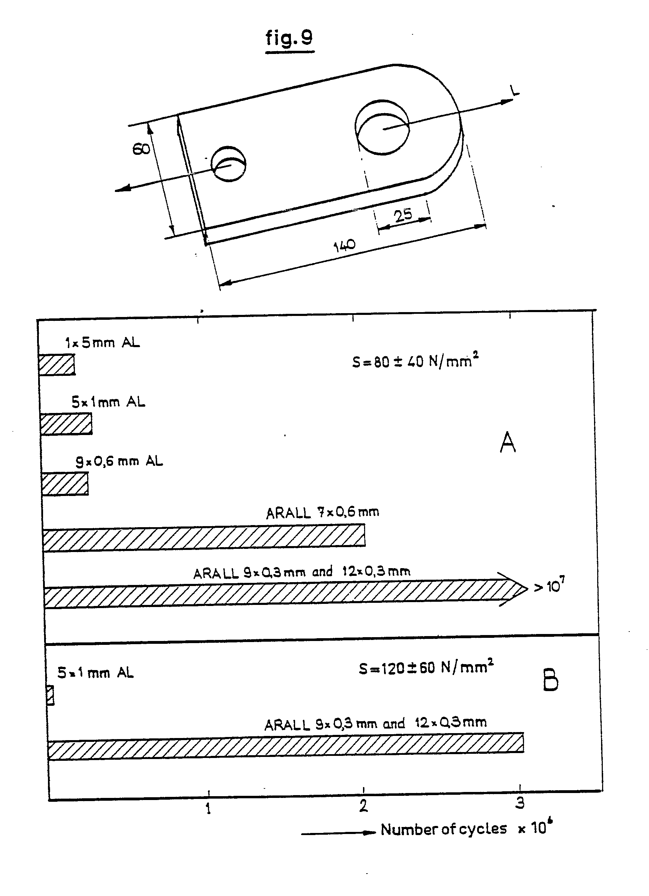

Figure 9 gives the results of fatigue tests on specimens of the lug type, drawn at the top in Figure 9, that had been subjected to a varying load at constant amplitude. The tests were carried out on various types of materials which are denoted in the same way as in Figure 8. From the results mentioned in the rectangle A it appears that the ARALL laminate of metal sheets having a thickness of less than 1 mm possesses particularly favourable properties and that the results even improve with decreasing layer thickness of the metal sheets. In rectangle B of Figure 9 are the test results obtained under a higher mean load and in that case, too, ARALL laminate exhibits a particularly favourable behaviour.

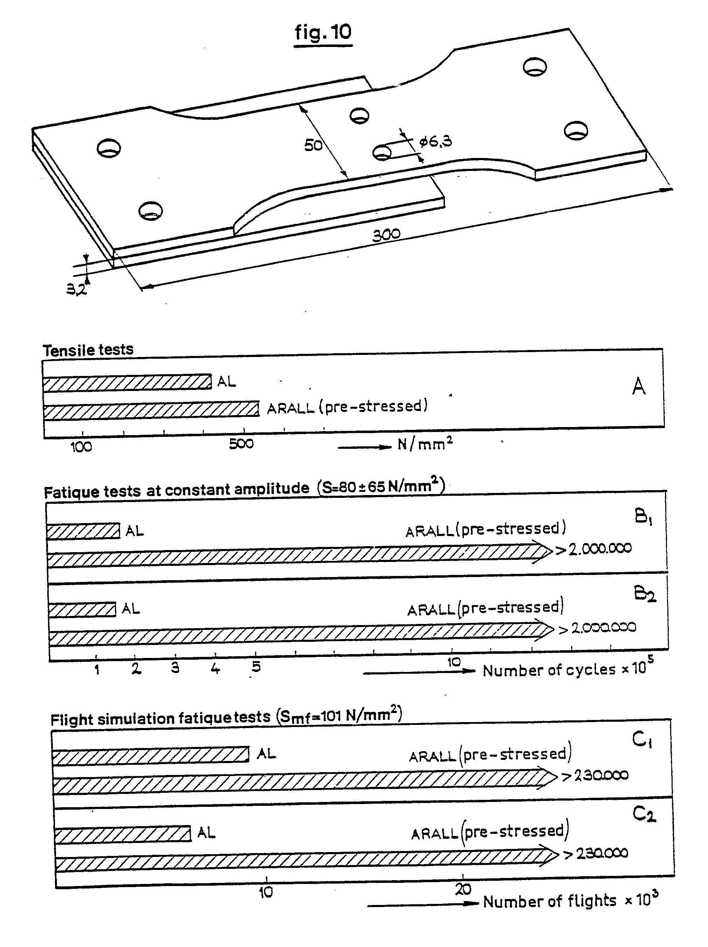

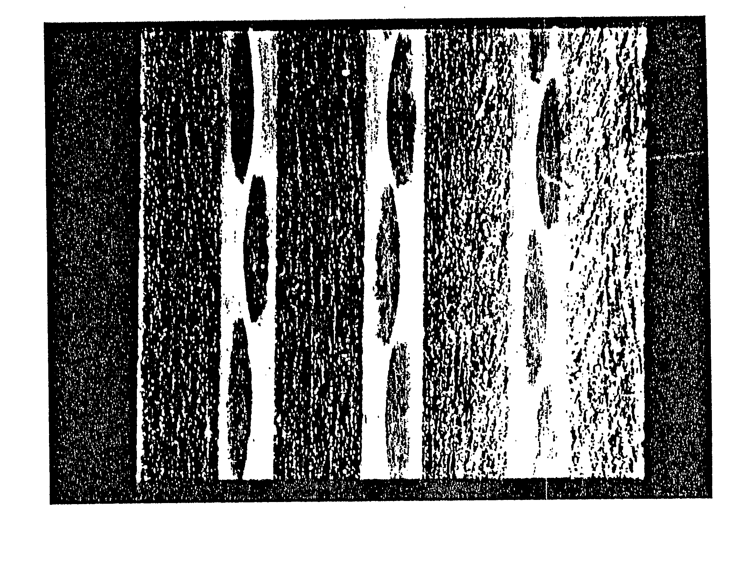

Figure 10 shows the results of tests carried out on material of the bolt-joint type commonly used in aircraft engineering. A test specimen of this type is drawn in perspective in Figure 10 at the top, provided with a bore 6.3 mm in diameter for accommodating a bolt. In rectangle A of Figure 10 are the results of tensile tests, mentioning the tensile strength in N/mm². It shows that the pre-stressed ARALL laminate has a tensile strength which is about 22% higher than that of solid aluminium sheet material (Al). The aluminium sheets are of the same kind of alloys as mentioned with reference to Figure 6—9. In the rectangles $B_1$ and $B_2$ of Figure 10 are the results of tests using a varying tensile load at constant amplitude. They show that the test specimen of pre-stressed ARALL laminate may be subjected to a practically infinite number of loading cycles without being ruptured. Rectangle $B_2$ gives the results for test specimens which had previously been exposed for six weeks to a moist salt atmosphere. $B_1$ shows the results which had been obtained with test specimens which had merely been exposed to the normal atmosphere. In the rectangles $C_1$ and $C_2$ of Figure 10 are the results of tests in which the test specimens were subjected to a highly fluctuating load in accordance with a flight simulation programme as used in aircraft engineering. They, too, show that the pre-stressed ARALL laminate withstands a practically unlimited number of simulated flights. In rectangle $C_2$ are the results obtained with test specimens that had previously been exposed for 6 weeks to a damp salt atmosphere. Rectangle C gives the result obtained with test specimens that had merely been exposed to the normal atmosphere. Comparing the results of $C_1$ and $C_2$ shows that unlike the test specimens of solid aluminium the test specimens of pre-stressed ARALL laminate were not affected by salt atmosphere.

The above-described test results mainly relate to laminates according to the invention, the metal sheets being of an aluminium-copper alloy which finds large scale application in aircraft engineering, the layers of adhesive of a thermohardening material containing a fabric of poly-paraphenylene terephthalamide yarns. The yarns used must possess a low creep, as for instance Arenka 930, of which the creep properties are mentioned in said article in Plastica, November 1977, No. 11, pp. 374 through 380.

Although in the laminates according to the invention it is preferred to apply metal sheets having the same thickness, it is also possible in principle that in one and the same laminate there are contained metal sheets which have two or more different thicknesses and are arranged symmetrical or not. It is also possible in principle that in one and the same laminate there are contained sheets of different aluminium-containing metals or aluminium alloys. The laminates according to the invention may in principle be made in the form of sheet material having a width of, say, 1 m and a length of a few meters. Apart from being used in the field of aircraft and spacecraft engineering, the laminates according to the invention also may with advantage find application in various other fields of engineering, particularly where high demands are made on static, dynamic (fatigue properties) and damage tolerance properties.

**Claims**

1. A laminate, particularly for the use as a component of an aircraft, comprising at least two metal sheets of an aluminium alloy, between which are provided fibres based on aromatic polyamides and having a high modulus of elasticity, the metal sheets and the fibres being bonded together by means of an adhesive and the metal sheets each having a thickness which is smaller than 1 mm, said laminate being characterized in that:

A. the aromatic polyamide fibres consist of poly-paraphenylene terephthalamide (PPDT) yarns;

B. said PPDT yarns are made up of endless filaments and the yarns are so contained in the completed laminate that they lie in practically straight lines in the adhesive;

C. said PPDT filaments are of a material whose modulus of elasticity is in the range of higher than $5 \times 10^4$ to not higher than $25 \times 10^4$ N/mm$^2$;

D. said adhesive substantially consists of a thermohardening material;

E. said PPDT filaments are present in said adhesive in an amount of 20 to 80% by weight calculated on the total weight of adhesive and filaments;

F. each of said metal sheets is of an aluminium alloy having a tensile strength higher than 350 N/mm$^2$;

G. the thickness of each of the metal sheets is greater than the thickness of the individual yarn-adhesive layers.

2. A laminate according to claim 1, characterized in that each of said metal sheets has a thickness in the range 0.3 to 0.7 mm.

3. A laminate according to claim 1, characterized in that the PPDT yarns are arranged in one or more groups in which the yarns extend parallel to one another.

4. A laminate according to claim 1, characterized in that the yarns are provided in the form of a woven fabric.

5. A laminate according to claim 4, characterized in that the woven fabric has 7 to 11, preferably about 9, PPDT warp yarns per cm, each having a linear density of decitex 1200—2000, preferably about decitex 1610, and 750—1250 filaments, preferably about 1000 filaments.

6. A laminate according to claim 1, characterized in that the metal sheets consist of an aluminium-copper alloy, particularly of the type AA (USA) No. 2024—T$_3$.

7. A laminate according to claim 1, characterized in that the metal sheets consist of an aluminium-zinc alloy, particularly of the type AA (USA) No. 7075—T$_6$.

8. A laminate according to claim 1, characterized in that said PPDT-filaments are present in said adhesive in an amount of 45 to 55% by weight calculated by total weight of adhesive and filaments.

9. A laminate according to claim 1, characterized in that said PPDT-filaments are of a material whose modulus of elasticity is in the range of from $10 \times 10^4$ to $15 \times 10^4$ N/mm$^2$.

10. A laminate according to claim 1, characterized in that the laminate is composed of three, four, five or more metal sheets.

11. Use of a laminate according to one or more of the preceding claims, as a structural component of an aircraft, preferably for a lower wing skin.

**Patentansprüche**

1. Schichtstoff, insbesondere zur Verwendung als ein Bestandteil eines Luftfahrzeuges, welcher wenigstens zwei Metallschichten einer Aluminiumlegierung umfaßt, zwischen welchen Fasern auf der Basis aromatischer Polyamide vorgesehen sind und welche einen hohen Elastizitätsmodul haben, wobei die Metallschichten und die Fasern mittels eines Klebstoffes miteinander verbunden sind und jede der Metallschichten eine Stärke von Weniger als 1 mm hat, wobei oben genannter Schichtstoff dadurch gekennzeichnet ist daß:

A. die aromatischen Polyamidfasern aus Polyparaphenylenterephthalamid (PPDT)garnen bestehen;

B. die PPDTgarne aus Enlosfilamenten gemacht sind und daß die Garne im vollständigen Schicht stoff so enthalten sind daß sie im wesentlichen in geraden Linien im Klebstoff liegen;

C. die PPDTgarne aus einem Material sind, dessen Elastizitätsmodul in der Größenordnung von über $5 \times 10^4$ bis maximal $25 \times 10^4$ N/mm$^4$ ist;

D. der Klebstoff im wesentlichen aus einem wärmeaushärtenden Material besteht;

E. die PPDTfilamenten in einer Menge von 20 bis 80 Gew.-%, berechnet für das Gesamtgewicht von Klebstoff und Filamenten, im oben genannten Klebstoff vorhanden sind;

F. jede der Metallschichten aus einer Aluminiumlegierung mit einer Zugfestigkeit von über 350 N/mm$^2$ besteht;

G. die Stärke jeder Metallschicht größer als die Stärke der einzelnen Fadenklebstoffschichten ist.

2. Schichtstoff nach Anspruch 1, dadurch gekennzeichnet, daß jede der Metallschichten eine Stärke in der Größenordnung von 0.3 bis 0.7 mm hat.

3. Schichtstoff nach Anspruch 1, dadurch gekennzeichnet, daß die PPDTgarne in einer oder mehreren Gruppen angeordnet sind, in welchen die Garne parallel zueinander verlaufen.

4. Schichtstoff nach Anspruch 1, dadurch gekennzeichnet, daß die Garne in der Form eines Gewebes vorgesehen sind.

5. Schichtstoff nach Anspruch 4, dadurch gekennzeichnet, daß das Gewebe 7 bis 11, vorzugsweise über 9 PPDT Kettgarne/cm hat, wovon jeder eine Feinheit von 1200 bis 2000 decitex, vorzugsweise etwa 1610 decitex, und 750 bis 1250 Filamenten, vorzugsweise etwa 1000 Filamenten hat.

6. Schichtstoff nach Anspruch 1, dadurch gekennzeichnet, daß die Metallschichten aus einer Aluminiumkupferlegierung, insbesondere vom Typ AA(USA) Nr. 2024—T$_3$ bestehen.

7. Schichtstoff nach Anspruch 1, dadurch gekennzeichnet, daß die Metallschichten aus einer Aluminiumzinklegierung, insbesondere vom Typ AA(USA) Nr. 7075—T$_6$ bestehen.

8. Schichtstoff nach Anspruch 1, dadurch gekennzeichnet, daß die PPDTfilamenten im Klebstoff in einer Menge von 45 bis 55 Gew.-%, berechnet auf das Gesamtgewicht des Klebstoffes und der Filamenten vorhanden sind.

9. Schichtstoff nach Anspruch 1, dadurch gekennzeichnet, daß die PPDTfilamenten aus einem Material sind, dessen Elastizitätsmodul in der Größenordnung von $10 \times 10^4$ bis $15 \times 10^4$ N/mm$^2$ ist.

10. Schichtstoff nach Anspruch 1, dadurch gekennzeichnet, daß der Schichtstoff aus 3, 4, 5, oder mehr Metallschichten zusammengesetzt ist.

11. Verwendung eines Schichtstoffes nach einem oder mehreren der vorhergehenden Ansprüche als eine Baukomponente eines Luftfahrzeuges, vorzugsweise für eine Außenhaut einer Tragflächenunterseite.

**Revendications**

1. Stratifié, en particulier pour l'emploi comme composant d'un avion, comprenant au moins deux feuilles métalliques d'un alliage d'aluminium entre lesquelles sont prévues des fibres à base de polyamides aromatiques et ayant un module d'elasticité élevé, les feuilles métalliques et les fibres étant collées ensemble au moyen d'un adhésif et les feuilles métalliques ayant chacune une épaisseur inférieure à 1 mm, le dit stratifié étant caractérisé en ce que:

A. les fibres de polyamide aromatique consistent en des fils de polyparaphénylènetéréphtalamide (PPDT);

B. les dits fils de PPDT sont faits de filaments infinis et les fils sont contenus dans le stratifié fini de telle sorte qu'ils s'étendent pratiquement selon des lignes droites dan l'adhésif;

C. les dits filaments de PPDT sont faits d'un matériau dont le module d'élasticité appartient au domaine: supérieur à $5 \times 10^4$ et ne dépassant pas $25 \times 10^4$ N/mm²;

D. le dit adhésif consiste essentiellement en un matériau thermodurcissable;

E. les dits filaments de PPDT sont présents dans le dit adhésif en proportion de 20 à 80% en poids calculée sur le poids total de l'adhésif et des filaments;

F. chacune des dites feuilles métalliques est faite d'un alliage d'aluminium de résistance à la rupture par traction supérieure à 350 N/mm²;

G. l'épaisseur de chacune des feuilles métalliques est supérieure à l'épaisseur des couches fils-adhésif individuelles.

2. Stratifié selon la revendication 1, caractérisé en ce que chacune des feuilles métalliques a une épaisseur de 0,3 à 0,7 mm.

3. Stratifié selon la revendication 1, caractérisé en ce que les fils de PPDT sont disposés en un ou plusieurs groupes dans lesquels les fils s'étendent parallèlement les uns aux autres.

4. Stratifié selon la revendication 1, caractérisé en ce que les fils sont procurés sous forme d'un tissu tissé.

5. Stratifié selon la revendication 4, caractérisé en ce que le tissu tissé possède 7 à 11, de préférence environ 9, fils de chaîne en PPDT par cm, chacun ayant une densité linéaire de 1200—2000 décitex, de préférence d'environ 1610 décitex, 750—1250 filaments, de préférence environ 1000 filaments.

6. Stratifié selon la revendication 1, caractérisé en ce que les feuilles métalliques consistent en un alliage aluminium-cuivre, en particulier du type AA(USA) n° 2024—$T_3$.

7. Stratifié selon la revendication 1, caractérisé en ce que les feuilles métalliques consistent en un alliage aluminium-zinc, en particulier du type AA(USA) n° 7075—$T_6$.

8. Stratifié selon la revendication 1, caractérisé en ce que les dits filaments de PPDT sont présents dans le dit adhésif en proportion de 45 à 55% en poids calculée sur le poids total de l'adhésif et des filaments.

9. Stratifié selon la revendication 1, caractérisé en ce que les dits filaments de PPDT sont faits d'un matériau dont le module d'elasticité est de $10 \times 10^4$ à $15 \times 10^4$ N/mm².

10. Stratifié selon la revendication 1, caractérisé en ce que le stratifié est composé de trois, quatre, cinq, ou davantage, feuilles métalliques.

11. Utilisation d'un stratifié selon l'une ou plusieurs des revendications précédentes, en tant que composant de la structure d'un avion, de préférence pour un carénage inférieur d'aile.

0 056 289

fig. 1

fig.2

fig.3

fig.4

1

0 056 289

fig.5

## fig.6

ARALL:

AL 0,6mm

Ar

AL

ARALL

AL

ARALL

ARALL (pre-stressed)

100    500    1000    → Tensile stress in N/mm²

160    25

160    25    ⌀6,3

## fig.7

## fig.8

A

$S_{mf} \sim 70 \, N/mm^2$

1×3mm AL

3×1mm AL

5×0,6mm AL.

5×0,6mm ARALL

B

$S_{mf} \sim 90 \, N/mm^2$

5×0,6mm AL

5×0,6mm ARALL

C

$S_{mf} \sim 100 \, N/mm^2$

5×0,6 mm ARALL pre-stressed

50     100

⟶ Number of flights × $10^3$

## fig.9

## fig. 10

**Tensile tests**

AL

ARALL (pre-stressed)

A

100     500     ⟶ N/mm²

**Fatique tests at constant amplitude (S=80±65 N/mm²)**

B₁

AL     ARALL(pre-stressed)

>2.000.000

B₂

AL     ARALL(pre-stressed)

>2.000.000

1   2   3   4   5     10   ⟶ Number of cycles × 10⁵

**Flight simulation fatique tests (Smf=101 N/mm²)**

C₁

AL     ARALL(pre-stressed)

>230.000

C₂

AL     ARALL(pre-stressed)

>230.000

10     20     ⟶ Number of flights × 10³

7